(19) Europäisches Patentamt
European Patent Office
Office européen des brevets

(11) EP 4 707 845 A1

(12) **EUROPEAN PATENT APPLICATION**
published in accordance with Art. 153(4) EPC

(43) Date of publication:
11.03.2026 Bulletin 2026/11

(21) Application number: 24801459.9

(22) Date of filing: 09.07.2024

(51) International Patent Classification (IPC):
*G01S 3/16* (2006.01)    *G01S 5/04* (2006.01)

(52) Cooperative Patent Classification (CPC):
G01S 3/16; G01S 5/04

(86) International application number:
PCT/CN2024/104509

(87) International publication number:
WO 2026/011307 (15.01.2026 Gazette 2026/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicants:
• Lianzhou International Co., Ltd.
Shenzhen, Guangdong 518000 (CN)

• TP-Link Systems Inc.
Irvine, California 92618 (US)

(72) Inventor: CUI, Yaoshen
Shenzhen, Guangdong 518000 (CN)

(74) Representative: Studio Torta S.p.A.
Via Viotti, 9
10121 Torino (IT)

(54) **POSITIONING METHOD, POSITIONING DEVICE AND ELECTRONIC DEVICE**

(57) The present disclosure provides a positioning method, a positioning apparatus, and an electronic apparatus. The method includes: acquiring receiving signal values respectively corresponding to a plurality of antennas on a same testing site, wherein the receiving signal values are values of signals respectively received from a tested target; according to the receiving signal values respectively corresponding to the plurality of antennas, determining a horizontal azimuth angle between the tested target and the testing site and a vertical pitch angle between the tested target and the testing site; determining a space distance between the tested target and the testing site; and determining a spatial position of the tested target according to the horizontal azimuth angle, the vertical pitch angle, and the space distance. Therefore, the problem that a positioning method in the related art known to the inventor cannot take both complexity and high accuracy into consideration at the same time is solved.

Fig. 2

Receiving signal values respectively corresponding to a plurality of antennas on a same testing site are acquired, wherein the receiving signal values are values of signals respectively received from a tested target — S201

According to the receiving signal values respectively corresponding to the plurality of antennas, a horizontal azimuth angle between the tested target and the testing site and a vertical pitch angle between the tested target and the testing site are determined — S202

A space distance between the tested target and the testing site is determined — S203

A spatial position of the tested target is determined according to the horizontal azimuth angle, the vertical pitch angle, and the space distance — S204

**Description**

**Technical Field**

The present disclosure relates to the field of indoor positioning, and specifically to a positioning method, a positioning apparatus, a computer-readable storage medium, and an electronic apparatus.

**Background**

In an existing positioning technology, a plurality of testing sites that are not co-linear or coplanar need to be used for positioning or angle estimation, for example, a plurality of routers in a shopping mall are combined and positioned. However, such method is not suitable for indoor scenarios that are small and only have a few routers. In addition, since the indoor scenarios are relatively complex, distances calculated by using a Received Signal Strength Indication (RSSI) generally have high complexity.

Therefore, there is an urgent need for a method that may solve the problem that a positioning method in the related art known to the inventor cannot take both complexity and high accuracy into consideration at the same time.

**Summary**

The present disclosure is mainly intended to provide a positioning method, a positioning apparatus, a computer-readable storage medium, and an electronic apparatus, so as to at least solve the problem that a positioning method in the related art known to the inventor cannot take both complexity and high accuracy into consideration at the same time.

One aspect of the present disclosure provides a positioning method, including: acquiring receiving signal values respectively corresponding to a plurality of antennas on a same testing site, wherein the receiving signal values are values of signals respectively received from a tested target; according to the receiving signal values respectively corresponding to the plurality of antennas, determining a horizontal azimuth angle between the tested target and the testing site and a vertical pitch angle between the tested target and the testing site; determining a space distance between the tested target and the testing site; and determining a spatial position of the tested target according to the horizontal azimuth angle, the vertical pitch angle, and the space distance.

As at least one alternative embodiment, according to the receiving signal values respectively corresponding to the plurality of antennas, determining the horizontal azimuth angle between the tested target and the testing site includes: selecting receiving signal values of at least two antennas on a first target dimension from the receiving signal values respectively corresponding to the plurality of antennas; and determining the horizontal azimuth angle between the tested target and the testing site based on the receiving signal values of at least two antennas on the first target dimension.

As at least one alternative embodiment, determining the horizontal azimuth angle between the tested target and the testing site based on the receiving signal values of at least two antennas on the first target dimension includes: acquiring a first ratio between the receiving signal values of at least two antennas on the first target dimension; determining a first included angle between the first target dimension and a direction of the tested target based on the first ratio; and determining the horizontal azimuth angle between the tested target and the testing site based on the first included angle.

As at least one alternative embodiment, determining the first included angle between the first target dimension and the direction of the tested target based on the first ratio includes: acquiring a plurality of first predetermined ratio thresholds, where the plurality of first predetermined ratio thresholds are configured to determine a plurality of first ratio ranges, and different first ratio ranges correspond to different first predetermined included angles; determining a first target ratio range corresponding to the first ratio based on a comparison of the first ratio with the plurality of first ratio ranges; and determining a first predetermined included angle corresponding to the first target ratio range as the first included angle between the first target dimension and the direction of the tested target.

As at least one alternative embodiment, determining the horizontal azimuth angle between the tested target and the testing site based on the first included angle includes: respectively acquiring first included angles corresponding to at least two first target dimensions when there are at least two first target dimensions; and selecting the same included angles among the first included angles corresponding to the at least two first target dimensions as the horizontal azimuth angle between the tested target and the testing site.

As at least one alternative embodiment, according to the receiving signal values respectively corresponding to the plurality of antennas, determining the vertical pitch angle between the tested target and the testing site includes: selecting receiving signal values of at least two antennas on a second target dimension from the receiving signal values respectively corresponding to the plurality of antennas; and determining the vertical pitch angle between the tested target and the testing site based on the receiving signal values of at least two antennas on the second target dimension.

As at least one alternative embodiment, selecting the receiving signal values of the at least two antennas on the second target dimension from the receiving signal values respectively corresponding to the plurality of antennas includes:

selecting, as the second target dimension, a dimension where a normal direction does not overlap with a direction of the tested target.

As at least one alternative embodiment, determining the vertical pitch angle between the tested target and the testing site based on the receiving signal values of at least two antennas on the second target dimension includes: acquiring a second ratio between the receiving signal values of at least two antennas on the second target dimension; adjusting angles of the at least two antennas to change radiation patterns of the antennas; acquiring a third ratio between receiving signal values of the at least two adjusted antennas on the second target dimension; determining a second included angle between the second target dimension and a direction of the tested target based on the second ratio and the third ratio; and determining the second included angle as the vertical pitch angle between the tested target and the testing site.

As at least one alternative embodiment, determining the second included angle between the second target dimension and the direction of the tested target based on the second ratio and the third ratio includes: acquiring a plurality of second predetermined ratio thresholds, where the plurality of second predetermined ratio thresholds are configured to determine a plurality of second ratio ranges, and different second ratio ranges correspond to different second predetermined included angles; determining a second target ratio range based on a comparison of a difference value between the second ratio and the third ratio with the plurality of second ratio ranges; and determining a second predetermined included angle corresponding to the second target ratio range as the second included angle between the second target dimension and the direction of the tested target.

As at least one alternative embodiment, determining the space distance between the tested target and the testing site includes: determining an antenna gain of a corresponding antenna according to the horizontal azimuth angle, the vertical pitch angle, and a direction of the tested target and the corresponding antenna; determining a path loss between the corresponding antenna and the tested target according to the antenna gain of the corresponding antenna, an emission signal value of the tested target, and the receiving signal value of the corresponding antenna; determining a distance between the tested target and the corresponding antenna according to the path loss corresponding to the corresponding antenna; and determining the space distance between the tested target and the testing site based on distances respectively corresponding to the plurality of antennas on the testing site.

As at least one alternative embodiment, determining the spatial position of the tested target according to the horizontal azimuth angle, the vertical pitch angle, and the space distance includes: establishing a space coordinate system by using a geometric center of the testing site as an original point; and according to the horizontal azimuth angle, the vertical pitch angle, and the space distance, calculating three-dimensional coordinates of the tested target in the space coordinate system to obtain the spatial position of the tested target.

Another aspect of the present disclosure provides a positioning apparatus, including: an acquisition unit, configured to acquire receiving signal values respectively corresponding to a plurality of antennas on a same testing site, wherein the receiving signal values are values of signals respectively received; a first determination unit, configured to, according to the receiving signal values respectively corresponding to the plurality of antennas, determine a horizontal azimuth angle between the tested target and the testing site and a vertical pitch angle between the tested target and the testing site; a second determination unit, configured to determine a space distance between the tested target and the testing site; and a third determination unit, configured to determine a spatial position of the tested target according to the horizontal azimuth angle, the vertical pitch angle, and the space distance.

Another aspect of the present disclosure provides a computer-readable storage medium. The computer-readable storage medium includes a stored program. When the program is operated, a device where the computer-readable storage medium is located is controlled to execute any one of the positioning methods.

Another aspect of the present disclosure provides an electronic apparatus, including a memory and a processor. The memory stores a computer program; and the processor is configured to execute any one of the positioning methods by means of the computer program.

Through the application of the technical solutions of the present disclosure, first, receiving signal values respectively corresponding to a plurality of antennas on a same testing site are required, wherein the receiving signal values are values of signals respectively received; then, according to the receiving signal values respectively corresponding to the plurality of antennas, the horizontal azimuth angle between the tested target and the testing site and the vertical pitch angle between the tested target and the testing site are determined; then, the space distance between the tested target and the testing site is determined; and finally, the spatial position of the tested target is determined according to the horizontal azimuth angle, the vertical pitch angle, and the space distance. In this solution, an azimuth angle and a pitch angle are obtained by using communication performance indicators of the plurality of antennas of the same wireless access point, only a single site is required, data synchronization is not needed, such that the complexity of layout and calculation is low. Furthermore, since there is a large error in distance estimation based on the communication performance indicators when an antenna direction gain is not determined, in the present disclosure, the communication performance indicators are not directly used to estimate a distance, but a ratio of the communication performance indicators of different antennas is used to estimate an azimuth angle and a pitch angle corresponding to the dimension, such that an accurate angle may be estimated, thereby solving the problem that a positioning method in the related art known to the inventor cannot take both complexity and high accuracy into consideration at the same time.

## Brief Description of the Drawings

The drawings constituting a part of the present disclosure are used to provide a further understanding of the present disclosure. The exemplary embodiments of the present disclosure and the description thereof are configured to explain the present disclosure, but do not constitute improper limitations to the present disclosure. In the drawings:

Fig. 1 is a block diagram of a hardware structure of a mobile terminal executing a positioning method according to embodiments of the present disclosure.

Fig. 2 is a flowchart of a positioning method according to embodiments of the present disclosure.

Fig. 3 is a block structural diagram of a testing site according to embodiments of the present disclosure.

Fig. 4 is a block structural diagram of another testing site according to embodiments of the present disclosure.

Fig. 5 is a block structural diagram of still another testing site according to embodiments of the present disclosure.

Fig. 6 is a schematic diagram of determination of a horizontal azimuth angle according to embodiments of the present disclosure.

Fig. 7 is a schematic diagram of determination of a vertical pitch angle according to embodiments of the present disclosure.

Fig. 8 is a block structural diagram of a positioning apparatus according to embodiments of the present disclosure.

The above drawings include the following reference numerals:
102. Processor; 104. Memory; 106. Transmission device; 108. Input/output device; 301. Testing site; 302. Mechanical antenna; 303. First antenna; 304. Second antenna; 305. Third antenna; 306. Fourth antenna; 307. Electrically tunable antenna; 308. Tunable antenna.

## Detailed Description of the Embodiments

It is to be noted that the embodiments in the present disclosure and the features in the embodiments may be combined with one another without conflict. The present disclosure will be described below in detail with reference to the drawings and the embodiments.
In order to enable those skilled in the art to better understand the solutions of the present disclosure, the technical solutions in the embodiments of the present disclosure will be clearly and completely described below in combination with the drawings in the embodiments of the present disclosure. It is apparent that the described embodiments are only part of the embodiments of the present disclosure, not all the embodiments. Based on the embodiments in the present disclosure, all other embodiments obtained by those of ordinary skill in the art without creative work shall all fall within the protection scope of the present disclosure.
It is to be noted that terms "first", "second" and the like in the description, claims and the above mentioned drawings of the present disclosure are used for distinguishing similar objects rather than describing a specific sequence or a precedence order. It should be understood that the data used in such a way may be exchanged where appropriate, in order that the embodiments of the present disclosure described here can be implemented. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.
As described in the Background, in the related art known to the inventor, a plurality of testing sites that are not co-linear or coplanar need to be used for positioning or angle estimation, for example, a plurality of routers in a shopping mall are combined and positioned, however, such method is not suitable for indoor scenarios that are small and only have a few routers. In addition, since the indoor scenarios are relatively complex, distances calculated by using a RSSI generally have high complexity. In order to solve the above problem, embodiments of the present disclosure provide a positioning method, a positioning apparatus, a computer-readable storage medium, and an electronic apparatus.

**EP 4 707 845 A1**

The technical solutions in the embodiments of the present disclosure will be clearly and completely described below with reference to the drawings in the embodiments of the present disclosure.

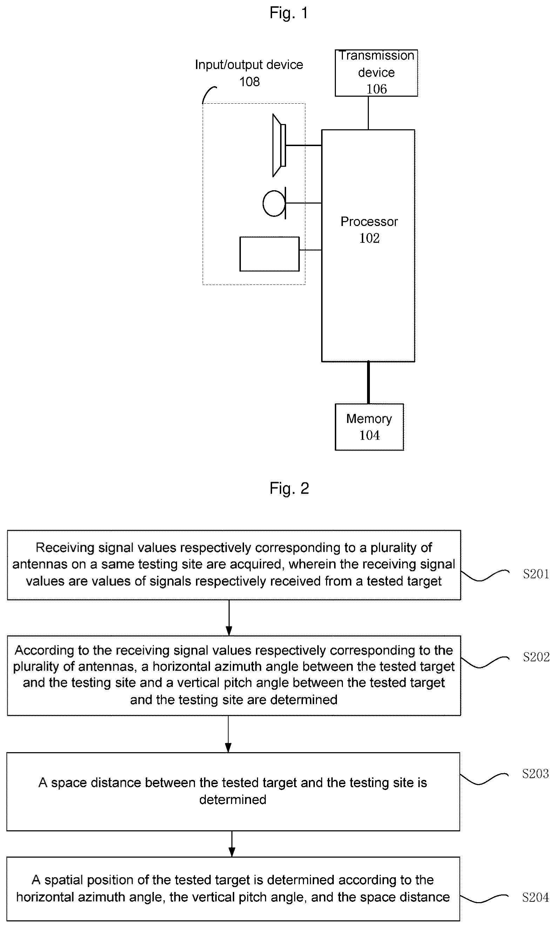

The method embodiments provided in the embodiments of the present disclosure may be executed in a mobile terminal, a computer terminal or a similar computing apparatus. By being operated on the mobile terminal as an example, Fig. 1 is a block diagram of a hardware structure of a mobile terminal executing a positioning method according to embodiments of the present disclosure. As shown in Fig. 1, the mobile terminal may include one or more (only one is shown in Fig. 1) processors 102 (the processor 102 may include, but is not limited to, a processing apparatus such as a microprocessor MCU or a programmable logic device FPGA) and a memory 104 configured to store data. The above mobile terminal may further include a transmission device 106 configured to achieve a communication function, and an input/output device 108. Those skilled in the art may understand that the structure shown in Fig. 1 is only a schematic diagram, which does not limit the structure of the above mobile terminal. For example, the mobile terminal may also include more or less components than those shown in Fig. 1, or have a different configuration from that shown in Fig. 1.

The memory 104 may be configured to store a computer program, for example, a software program and a module of application software, such as a computer program corresponding to a positioning method in the embodiments of the present disclosure. The processor 102 runs the computer program stored in the memory 104, so as to execute various functional applications and data processing, that is, to realize the above method. The memory 104 may include a high-speed random access memory, and may further include a non-volatile memory, such as one or more magnetic disk memory apparatuses, a flash memory device, or other non-volatile solid-state memory devices. In some embodiments, the memory 104 may further include memories remotely disposed relative to the processor 102. The remote memories may be connected to the mobile terminal by using a network. Examples of the above network include, but are not limited to, the Internet, an intranet, a local area network, a mobile communication network, and a combination thereof. The transmission device 106 is configured to receive or send data via the network. The specific example of the above network may include a wireless network provided by a communication provider of the mobile terminal. In an example, the transmission device 106 includes a Network Interface Controller (NIC), and may be connected to other network devices by using a base station, so as to communicate with the Internet. In an example, the transmission device 106 is a Radio Frequency (RF) module, which is configured to communicate with the Internet in a wireless manner.

This embodiment provides a positioning method that is operated in a mobile terminal, a computer terminal, or a similar computing apparatus. **It** is to be noted that the steps shown in the flow diagram of the accompanying drawings may be executed in a computer system, such as a set of computer-executable instructions, and although a logical sequence is shown in the flow diagram, in some cases, the steps shown or described may be executed in a different order than here.

Fig. 2 is a flowchart of a positioning method according to embodiments of the present disclosure. As shown in Fig. 2, the method includes the following steps.

At S201, receiving signal values respectively corresponding to a plurality of antennas on a same testing site are acquired, wherein the receiving signal values are values of signals respectively received from a tested target.

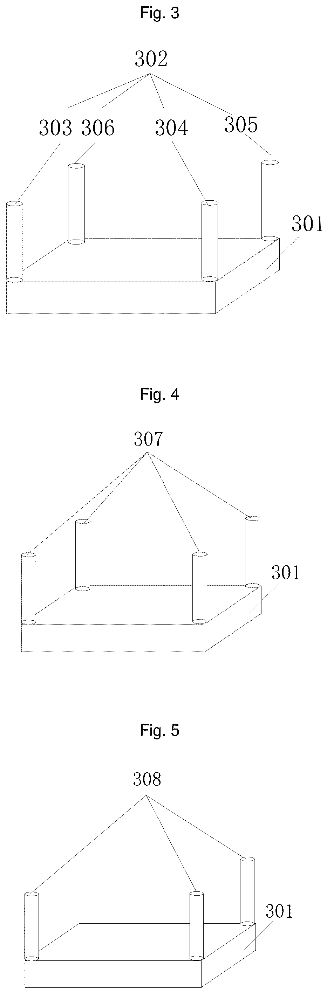

For example, the type of the antennas and an arrangement mode of the plurality of antennas on the same testing site are not limited in the present disclosure. The antenna may be a mechanical antenna, an omnidirectional antenna, or the like. The plurality of antennas may be arranged according to a regular pattern, or may also be arranged according to an irregular pattern. As shown in Fig. 3, the testing site 301 has four same mechanical antennas 302, which respectively are a first antenna 303, a second antenna 304, a third antenna 305, and a fourth antenna 306. The four mechanical antennas 302 are distributed in a rectangle on a same plane, and can at least be adjusted in a pitching manner in a vertical direction; and the antenna is a conventional omnidirectional antenna, that is, antenna gains are the same at all angles in a horizontal direction and symmetrically distributed in the vertical direction with a high center and two low sides. As shown in Fig. 4, the testing site 301 has four same electrically tunable antennas 307, the four electrically tunable antennas 307 are distributed in a rectangle on the same plane, and the antenna gains are the same at all angles in the horizontal direction and may adjust the directionality of the antenna gains in an electrically tunable manner in the vertical direction. As shown in Fig. 5, the testing site 301 has three same tunable antennas 308, the three tunable antennas 308 are distributed in a triangle on the same plane, and the antenna gains are the same at all angles in the horizontal direction and may adjust the directionality of the antenna gains in an electrically tunable manner or a mechanical manner in the vertical direction. The receiving signal value may be a Received Signal Strength Indication (RSSI), a Received Channel Power Indicator (RCPI), Time of Flight (TOF), or the like; the RSSI is an indicator for measuring the strength of a radio signal; and the RSSI is configured to indicate the strength of the received radio signal, so as to evaluate the quality and stability of the signal. The RSSI is measured in decibels milliwatts (dBm), and if a numerical value is greater, it indicates that the signal is stronger. The RCPI refers to a power level of the received signal in a wireless communication system, which is generally configured to measure the strength and quality of the received signal, so as to evaluate and optimize the radio signal. The RSSI is also measured in dBm. The TOF refers to the time required by a signal from a sending end to a receiving end during wireless communication, and is configured to evaluate the transmission delay and stability of the radio signal; and the TOF is measured in nanosecond (ns) or microsecond ($\mu$s).

At S202, according to the receiving signal values respectively corresponding to the plurality of antennas, a horizontal azimuth angle between the tested target and the testing site and a vertical pitch angle between the tested target and the testing site are determined.

For example, the horizontal azimuth angle is an angle of an object relative to a horizon, and is configured to describe a position of the object in the horizontal direction. The vertical pitch angle is an angle of the object relative to a horizontal plane, and is configured to describe a position of the object in the vertical direction. There may be a certain error during actual measurement, such that proper amendment and correction may be further performed on measurement results.

At S203, a space distance between the tested target and the testing site is determined.

For example, after the horizontal azimuth angle and the vertical pitch angle are determined, the square root of the sum of squares of the horizontal azimuth angle and the vertical pitch angle may be calculated according to a horizontal distance and a vertical distance, that is, a distance between the testing site and an object to be positioned.

At S204, a spatial position of the tested target is determined according to the horizontal azimuth angle, the vertical pitch angle, and the space distance.

For example, the spatial position of the tested target is the spatial position of the tested target in a predetermined coordinate system, and the predetermined coordinate system is a coordinate system that is established by using a geometric center of the testing site as an original point. In a process of actually establishing the predetermined coordinate system, a geometric center of an antenna of the testing site may be used as an original point to establish a space coordinate system, and three-dimensional coordinates to be positioned are calculated according to parameters such as an azimuth angle, a pitch angle, the space distance, and the like; and other coordinate systems may also be established by using other original point positions.

Through this embodiment, first, the receiving signal values are required from the tested target that are respectively received by the plurality of antennas on the same testing site; then, according to the receiving signal values respectively corresponding to the plurality of antennas, the horizontal azimuth angle between the tested target and the testing site and the vertical pitch angle between the tested target and the testing site are determined; then, the space distance between the tested target and the testing site is determined; and finally, the spatial position of the tested target is determined according to the horizontal azimuth angle, the vertical pitch angle, and the space distance. In this solution, an azimuth angle and a pitch angle are obtained by using communication performance indicators of the plurality of antennas on a same wireless access point, merely a single site is required, data synchronization is not needed, such that the complexity of layout and calculation is low. Furthermore, since there is a large error in distance estimation based on the communication performance indicators when an antenna direction gain is not determined, in the present disclosure, the communication performance indicators are not directly used to estimate a distance, but a ratio of the communication performance indicators of different antennas is used to estimate an azimuth angle and a pitch angle corresponding to the dimension, such that an accurate angle may be estimated, thereby solving the problem that a positioning method in the related art known to the inventor cannot take both complexity and high accuracy into consideration at the same time.

In an example implementation process, S202 may be implemented by the following steps: S2021, the receiving signal values of at least two antennas on a first target dimension are selected from the receiving signal values respectively corresponding to the plurality of antennas; and S2022, the horizontal azimuth angle between the tested target and the testing site is determined based on the receiving signal values of at least two antennas on the first target dimension. The method may further accurately determine the horizontal azimuth angle between the tested target and the testing site according to the receiving signal values respectively corresponding to the plurality of antennas.

As at least one alternative embodiment, the first target dimension may be a one-dimensional straight line, or may also be a two-dimensional plane. That is to say, the at least two antennas on the first target dimension may be at least two antennas on the same straight line, or may also be at least two antennas on the same plane.

In order to further accurately determine the horizontal azimuth angle between the tested target and the testing site, S2022 of the present disclosure may be implemented by the following steps: S20221, a first ratio between the receiving signal values of at least two antennas on the first target dimension is acquired; S20222, a first included angle between the first target dimension and a direction of the tested target is determined based on the first ratio; and S20223, the horizontal azimuth angle between the tested target and the testing site is determined based on the first included angle.

As at least one alternative embodiment, when there are two antennas, the first ratio may be obtained by directly calculating a ratio between the receiving signal values of the two antennas. When there are more than two antennas, ratios between the receiving signal values of any two antennas are calculated to obtain a plurality of ratios, and then an average value of the plurality of ratios is calculated to obtain the first ratio. In the present disclosure, calculation formulas of the ratio is not specifically limited, for example, $\text{Ratio} = \frac{R_i}{R_j}$, $\text{Ratio} = \frac{R_i - R_j}{R_j}$, or $\text{Ratio} = \frac{R_i - R_{ave}}{R_j - R_{ave}}$, where Ratio is the first ratio, $R_i$ is the receiving signal value of the ith antenna, $R_j$ is the receiving signal value of the jth antenna, and $R_{ave}$ is an average value of the receiving signal values of at least two antennas.

S20222 may be implemented by the following steps: S202221, a plurality of first predetermined ratio thresholds are acquired, where the plurality of first predetermined ratio thresholds are configured to determine a plurality of first ratio ranges, and different first ratio ranges correspond to different first predetermined included angles; S202222, a first target ratio range corresponding to the first ratio is determined based on a comparison of the first ratio with the plurality of first ratio ranges; and S202223, the first predetermined included angle corresponding to the first target ratio range is determined as the first included angle between the first target dimension and the direction of the tested target. The method may further accurately determine the first included angle between the first target dimension and the direction of the tested target based on the first ratio.

For example, the first target ratio range may be determined by quantizing an angular space and using the first predetermined ratio thresholds, or may also be determined by establishing a segmented mapping function of the first ratio range and the first ratio, and the present disclosure is not strictly limited thereto. Moreover, in the technical solution, the number of the first ratio ranges is not limited.

S20223 may be implemented by the following steps: S202231, the first included angles corresponding to at least two first target dimensions are respectively acquired when there are at least two first target dimensions; and S202232, the same included angles among the first included angles corresponding to the at least two first target dimensions are selected as the horizontal azimuth angle between the tested target and the testing site. The method further accurately determines the horizontal azimuth angle between the tested target and the testing site based on the first included angle.

For example, when there are at least two first target dimensions, since two antennas are merely on one dimension, there is necessarily ambiguity in the estimation of angles on the plane, that is, the estimated angles are two angles that are symmetrical to the line where the two angles are located. Thus, another non-parallel dimension is also needed for distinguishing. Therefore, the horizontal azimuth angle may be finally determined by combining the first included angles corresponding to at least two first target dimensions. In another embodiment, when there are at least two first target dimensions and the first target dimensions are not orthogonal to each other, the angles of the two first target dimensions may be amended through Euclidean space conversion.

S202 may be implemented by the following steps: S2023, the receiving signal values of at least two antennas on a second target dimension are selected from the receiving signal values respectively corresponding to the plurality of antennas; and S2024, the vertical pitch angle between the tested target and the testing site is determined based on the receiving signal values of at least two antennas on the second target dimension. The method may further accurately determine the vertical pitch angle between the tested target and the testing site according to the receiving signal values respectively corresponding to the plurality of antennas.

For example, the second target dimension may be a one-dimensional straight line, or may also be a two-dimensional plane. That is to say, the at least two antennas on the second target dimension may be at least two antennas on the same straight line, or may also be at least two antennas on the same plane.

S2023 may be implemented by the following step: S20231, a dimension where a normal direction does not overlap with a direction of the tested target is selected as the second target dimension. The method may rapidly determine the second target dimension to further improve the accuracy of determining the vertical pitch angle.

In a practical application, the normal direction and the direction of the tested target may not be in adjacent regions. The dimension where the normal direction does not overlap with the direction of the tested target is the second target dimension, such that at least two antennas on the second target dimension may be further rapidly selected, thereby improving the accuracy of determining the vertical pitch angle.

In order to further improve the accuracy of determining the vertical pitch angle, S2024 may be implemented by the following steps: S20241, a second ratio between the receiving signal values of at least two antennas on the second target dimension is acquired; S20242, angles of the at least two antennas are adjusted to change radiation patterns of the antennas; S20243, a third ratio between the receiving signal values of the at least two adjusted antennas on the second target dimension is acquired; S20244, a second included angle between the second target dimension and a direction of the tested target is determined based on the second ratio and the third ratio; and S20245, the second included angle is determined as the vertical pitch angle between the tested target and the testing site.

For example, adjusting the angles of the at least two antennas may use adjustment for symmetrical or opposite polarization, or may also be adjustment of the directionality of equally spaced antennas; and an adjustment mode may be electrically tunable, mechanical, etc., and the present disclosure is not strictly limited thereto. Calculation modes of the second ratio and the third ratio are similar to a calculation mode of the first ratio, and are not described herein again.

S20244 may be implemented by the following steps: S202441, a plurality of second predetermined ratio thresholds are acquired, where the plurality of second predetermined ratio thresholds are configured to determine a plurality of second ratio ranges, and different second ratio ranges correspond to different second predetermined included angles; S202442, a second target ratio range is determined based on a comparison of a difference value between the second ratio and the third ratio with the plurality of second ratio ranges; and S202443, the second predetermined included angle corresponding to the second target ratio range is determined as the second included angle between the second target dimension and the direction of the tested target. The method further accurately determines the second included angle between the second target dimension and the direction of the tested target based on the second ratio and the third ratio.

For example, the second ratio range may be determined by quantizing an angular space and using the second predetermined ratio thresholds, or may also be determined by establishing a segmented mapping function of the second ratio range and the second ratio or the third ratio, and the present disclosure is not strictly limited thereto. Moreover, in the technical solution, the number of the second ratio ranges is not limited. The second target ratio range is determined based on the comparison of the difference value between the second ratio and the third ratio with the plurality of second ratio ranges, such that the comparison with the second ratio range may be realized merely according to the difference value between the second ratio and the third ratio, or according to a ratio of the difference value to an amend parameter.

S203 may be implemented by the following steps: S2031, an antenna gain of a corresponding antenna is determined according to the horizontal azimuth angle, the vertical pitch angle, and a direction of the tested target and the corresponding antenna; S2032, a path loss between the corresponding antenna and the tested target is determined according to the antenna gain of the corresponding antenna, an emission signal value of the tested target, and the receiving signal value of the corresponding antenna; S2033, a distance between the tested target and the corresponding antenna is determined according to the path loss corresponding to the corresponding antenna; and S2034, the space distance between the tested target and the testing site is determined based on distances respectively corresponding to the plurality of antennas on the testing site. The method may further rapidly calculate the space distance.

For example, the antenna gain includes an emission antenna gain and a receiving antenna gain, where the emission antenna gain and the receiving antenna gain may be approximately the same. Antenna gain values corresponding to the measured horizontal azimuth angle and vertical pitch angle may be found according to an antenna chart or a parameter table provided by an antenna manufacturer. The corresponding antenna gain values may be found in the chart according to the angles obtained through measurement. According to the known horizontal azimuth angle $\theta$ and vertical pitch angle $\varphi$, and in combination with the directionality of the antenna, the corresponding antenna gain values $G_r(\theta, \varphi)$ are calculated, such that the path loss $PL_i$ is calculated according to a formula $PL_i = P_t + G_t + G_r - RSSI_i$, where $P_t$ is emission power, $G_t$ is the emission antenna gain, and $RSSI_i$ is the receiving signal value of the corresponding antenna. Then, according to a formula $PL_i = \alpha + 10\beta \log_{10}(d_i)$, the space distance is calculated, where $\alpha$ and $\beta$ are fitting coefficients.

S204 may be implemented by the following steps: S2041, a space coordinate system is established by using a geometric center of the testing site as an original point; and S2042, according to the horizontal azimuth angle, the vertical pitch angle, and the space distance, three-dimensional coordinates of the tested target in the space coordinate system are calculated to obtain the spatial position of the tested target. The method may further rapidly determine the spatial position of the tested target.

For example, in the process of actually establishing the predetermined coordinate system, the geometric center of the antenna of the tested target may be used as an original point to establish the space coordinate system, and three-dimensional coordinates of the object to be positioned are calculated according to parameters such as an azimuth angle, a pitch angle, the distance, and the like; and other coordinate systems may also be established by using other original point positions.

As shown in Fig. 3, the testing site 301 in this embodiment includes four same mechanical antennas 302. The four mechanical antennas 302 are distributed in a rectangle on a same plane, and can at least be adjusted in a pitching manner in a vertical direction; and the antenna is a conventional omnidirectional antenna, that is, antenna gains are the same at all angles in a horizontal direction and symmetrically distributed in the vertical direction with a high center and two low sides. This embodiment relates to a specific positioning method, including the following steps.

At S11, real-time RSSIs of the four antennas are collected once, that is, $RSSI_i(i = 1,2,3,4)$, a relationship with a distance $d_i(i = 1,2,3,4)$ of a tested point may be expressed as $RSSI_i = P_t + Gt + G_r - PL_i$, i = 1,2,3,4, where the four antennas receive a same signal, $P_t$ is emission power of the antenna, $G_t$ is the emission antenna gain of the antenna, $G_r$ is the receiving antenna gain, $G_t$ and $G_r$ may be considered to be approximately the same, the path loss $PL_i = \alpha + 10\beta\log_{10}(d_i)$, where $\alpha$ and $\beta$ are fitting coefficients, and the RSSI may be expressed as $RSSI_i = A - 10\beta \log_{10}(d_i)$, i = 1,2,3,4, where A is a real number, which is a sum of terms independent of the distance $d_i$.

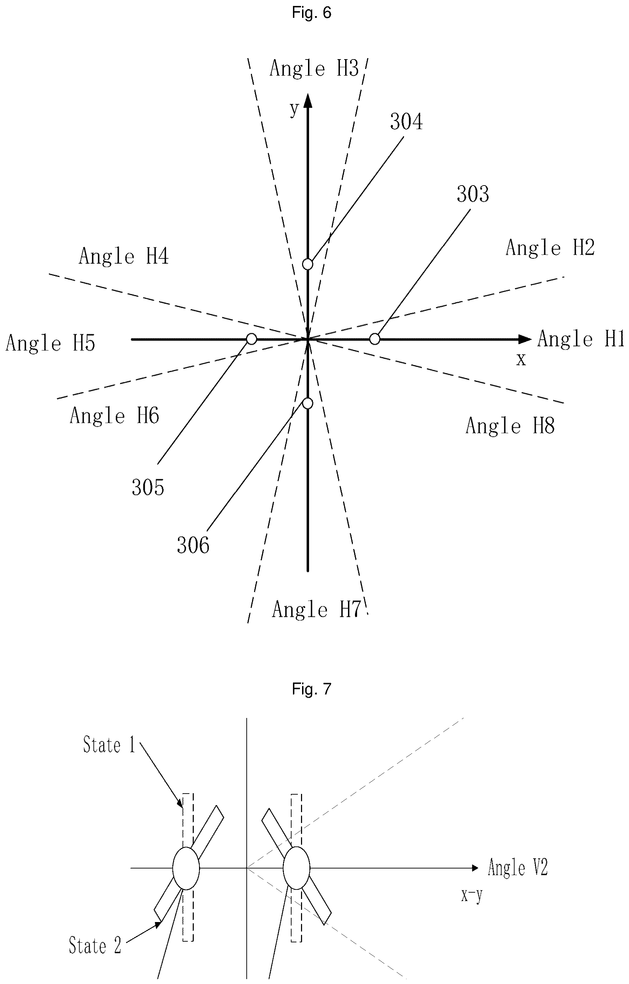

At S12, according to a formula $Ratio_{1,3} = \frac{RSSI_1}{RSSI_3} = \frac{A - 10\beta \log_{10}(d_1)}{A - 10\beta \log_{10}(d_3)} \propto \frac{d_1}{d_3}$, an RSSI ratio of the first antenna 303 to the third antenna 305 is calculated, then the RSSI ratio is mapped to a corresponding angle region, corresponding ratio thresholds $TH_1$ and $TH_2$ are set, as shown in Fig. 6, when $0 < Ratio_{1,3} < TH_1$, the azimuth angle is an angle H1; when $TH_1 \leq Ratio_{1,3} < TH_2 \leq 1$, the azimuth angle is an angle H2 or H8; when $TH_2 \leq Ratio_{1,3} < \frac{1}{TH_2}$, the azimuth angle is an angle H3 or H7; when $\frac{1}{TH_2} \leq Ratio_{1,3} < \frac{1}{TH_1}$, the azimuth angle is an angle H4 or H6; and when $\frac{1}{TH_1} < Ratio_{1,3}$, the azimuth angle is an angle H5.

At S13, since two antennas are merely on one dimension, there is necessarily ambiguity in the estimation of angles on the plane, that is, the estimated angles are two angles that are symmetrical to the line where the two angles are located, thus, another non-parallel dimension is also needed for distinguishing, and according to a formula

$$\text{Ratio}_{2,4} = \frac{\text{RSSI}_2}{\text{RSSI}_4} = \frac{A - 10\beta \log_{10}(d_2)}{A - 10\beta \log_{10}(d_4)} \propto \frac{d_2}{d_4}$$, an RSSI ratio of the second antenna 304 to the fourth antenna 306 is calculated.

At S14, a final horizontal angle may be finally determined by combining $\text{Ratio}_{1,3}$ and $\text{Ratio}_{2,4}$, that is, an azimuth angle $\theta$.

At 15, an antenna pair is selected according to the azimuth angle of S12, the azimuth angle and a normal of the antenna pair may not be in adjacent regions, since the azimuth angle is located at the angle H1, the first antenna 303 and the third antenna 305 are selected for vertical angle estimation, when the first antenna 303 and the third antenna 305 are in a state 1, the real-time RSSIs of the two antennas are collected once, and the RSSI ratio

$$\text{Ratio}_{1,3}^{(1)} : \text{Ratio}_{1,3}^{(1)} = \frac{\text{RSSI}_1^{(1)}}{\text{RSSI}_3^{(1)}} = \frac{B + G_{r,1}^{(1)} - 10\beta \log_{10}(d_1)}{B + G_{r,3}^{(1)} - 10\beta \log_{10}(d_3)} \propto \frac{d_1}{d_3}$$ is calculated, where B = A - G_r.

At S16, since the antenna has certain directionality in the vertical direction, that is, the antenna gain is high in center and low in two sides, such that antenna adjustment in the vertical direction significantly changes the receiving antenna gain $G_r$, so as to change RSSI and Ratio, and then antenna angles are adjusted to be in a state 2, that is, the first antenna 303 and the third antenna 305 are adjusted in an opposite direction, and a change direction of the antenna gain $G_r$ is also opposite; and then the real-time RSSIs of the two antennas are collected again, and the RSSI ratio $\text{Ratio}_{1,3}^{(2)}$ is calculated.

At S17, as shown in Fig. 7, according to a formula $\Delta_{ratio} = \text{Ratio}_{1,3}^{(2)} - \text{Ratio}_{1,3}^{(1)}$, a difference value between the RSSI ratios of the state 1 and the state 2 is calculated, then the RSSI ratios are mapped to the corresponding angle region, the corresponding ratio threshold $TH_v > 0$ is set, if the tested point is located on a right plane of a z-axis, when $\Delta_{ratio} < -TH_v$, the pitch angle is an angle V1; when $-TH_v \leq \Delta_{ratio} < TH_v$, the pitch angle is an angle V2; when $TH_v \leq \Delta_{ratio}$, the pitch angle is an angle V3; if the tested point is located on a left plane of the z-axis, when $\Delta_{ratio} < -TH_v$, the pitch angle is the angle V3; when $-TH_v \leq \Delta_{ratio} < TH_v$, the pitch angle is the angle V2; when $TH_v \leq \Delta_{ratio}$, the pitch angle is the angle V1; and a vertical angle is finally determined, that is, the pitch angle $\varphi$.

At S18, a three-dimensional distance is calculated, the corresponding antenna gain $G_r(\theta, \varphi)$ is calculated according to the known azimuth angle $\theta$ and pitch angle $\varphi$ of the tested point and in combination with the directionality of the antenna, and then the three-dimensional distance between the testing site and the tested point is calculated according to a relationship between the RSSI and the distance and the path loss.

At S19, a three-dimensional spatial position of the tested point may be determined according to the azimuth angle $\theta$ and pitch angle $\varphi$ of the tested point, and the three-dimensional space distance between the tested point and the testing site.

An embodiment of the present disclosure further provides a positioning apparatus. It is to be noted that the positioning apparatus of the embodiment of the present disclosure may be configured to execute the positioning method provided in the embodiments of the present disclosure. The apparatus is configured to implement the foregoing embodiments and the preferred implementations, and what has been described will not be described again. As used below, the term "module" may be a combination of software and/or hardware that implements a predetermined function. Although the apparatus described in the following embodiments is preferably implemented in software, but implementations in hardware, or a combination of software and hardware, are also possible and conceived.

The positioning apparatus provided in this embodiment of the present disclosure is introduced below.

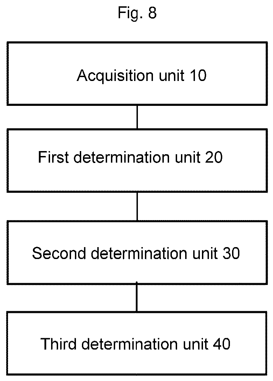

Fig. 8 is a schematic diagram of a positioning apparatus according to embodiments of the present disclosure. As shown in Fig. 8, the apparatus includes an acquisition unit 10, a first determination unit 20, a second determination unit 30, and a third determination unit 40.

The acquisition unit 10 is configured to acquire receiving signal values from a tested target that are respectively received by a plurality of antennas on a same testing site.

For example, the type of the antennas and an arrangement mode of the plurality of antennas on the same testing site are not limited in the present disclosure. The antenna may be a mechanical antenna, an omnidirectional antenna, or the like. The plurality of antennas may be arranged according to a regular pattern, or may also be arranged according to an irregular pattern. As shown in Fig. 3, the testing site has four same mechanical antennas. The four antennas are distributed in a rectangle on a same plane, and can at least be adjusted in a pitching manner in a vertical direction; and the antenna is a conventional omnidirectional antenna, that is, antenna gains are the same at all angles in a horizontal direction and symmetrically distributed in the vertical direction with a high center and two low sides. As shown in Fig. 4, the testing site may have four same electrically tunable antennas, the four antennas are distributed in a rectangle on the same plane, and the antenna gains are the same at all angles in the horizontal direction and may adjust the directionality of the antenna gains in an electrically tunable manner in the vertical direction. As shown in Fig. 5, the testing site may have three same tunable antennas, the three antennas are distributed in a triangle on the same plane, and the antenna gains are the same at all angles in the horizontal direction and may adjust the directionality of the antenna gains in an electrically tunable manner or a mechanical manner in the vertical direction. The receiving signal value may be an RSSI, an RCPI, TOF, or the like; the RSSI is an indicator for measuring the strength of a radio signal; and the RSSI is configured to indicate the strength of the received radio signal, so as to evaluate the quality and stability of the signal. The RSSI is measured in dBm, and if a numerical value is greater, it indicates that the signal is stronger. The RCPI refers to a power level of the received signal in a wireless communication system, which is generally configured to measure the strength and quality of the received signal, so as to evaluate and optimize the radio signal. The RSSI is also measured in dBm. The TOF refers to the time required by a signal from a sending end to a receiving end during wireless communication, and is configured to evaluate the transmission delay and stability of the radio signal; and the TOF is measured in nanosecond (ns) or microsecond ($\mu$s).

The first determination unit 20 is configured to, according to the receiving signal values respectively corresponding to the plurality of antennas, determine a horizontal azimuth angle between the tested target and the testing site and a vertical pitch angle between the tested target and the testing site.

For example, the horizontal azimuth angle is an angle of an object relative to a horizon, and is configured to describe a position of the object in the horizontal direction. The vertical pitch angle is an angle of the object relative to a horizontal plane, and is configured to describe a position of the object in the vertical direction. There may be a certain error during actual measurement, such that proper amendment and correction may be further performed on measurement results.

The second determination unit 30 is configured to determine a space distance between the tested target and the testing site.

For example, after the horizontal azimuth angle and the vertical pitch angle are determined, the square root of the sum of squares of the horizontal azimuth angle and the vertical pitch angle may be calculated according to a horizontal distance and a vertical distance, that is, a distance between the testing site and an object to be positioned.

The third determination unit 40 is configured to determine a spatial position of the tested target according to the horizontal azimuth angle, the vertical pitch angle, and the space distance.

For example, the spatial position of the tested target is the spatial position of the tested target in a predetermined coordinate system, and the predetermined coordinate system is a coordinate system that is established by using a geometric center of the testing site as an original point. In a process of actually establishing the predetermined coordinate system, a geometric center of an antenna of the testing site may be used as an original point to establish a space coordinate system, and three-dimensional coordinates to be positioned are calculated according to parameters such as an azimuth angle, a pitch angle, the space distance, and the like; and other coordinate systems may also be established by using other original point positions.

Through this embodiment, the acquisition unit acquires the receiving signal values from the tested target that are respectively received by the plurality of antennas on the same testing site; the first determination unit determines the horizontal azimuth angle between the tested target and the testing site and the vertical pitch angle between the tested target and the testing site according to the receiving signal values respectively corresponding to the plurality of antennas; the second determination unit determines the space distance between the tested target and the testing site; and the third determination unit determines the spatial position of the tested target according to the horizontal azimuth angle, the vertical pitch angle, and the space distance. An azimuth angle and a pitch angle are obtained by using communication performance indicators of the plurality of antennas of a same wireless access point, merely one single site is required, data synchronization is not needed, such that the complexity of layout and calculation is low. Furthermore, since there is a large error in distance estimation based on the communication performance indicators when an antenna direction gain is not determined, in the present disclosure, the communication performance indicators are not directly used to estimate a distance, but a ratio of the communication performance indicators of different antennas is used to estimate an azimuth angle and a pitch angle corresponding to the dimension, such that an accurate angle may be estimated, thereby solving the problem that a positioning method in the related art known to the inventor cannot take both complexity and high accuracy into consideration at the same time.

In an example implementation process, the first determination unit includes a first selection module and a first determination module. The first selection module is configured to select the receiving signal values of at least two antennas on a first target dimension from the receiving signal values respectively corresponding to the plurality of antennas; and the first determination module is configured to determine the horizontal azimuth angle between the tested target and the testing site based on the receiving signal values of at least two antennas on the first target dimension. The apparatus may further accurately determine the horizontal azimuth angle between the tested target and the testing site according to the receiving signal values respectively corresponding to the plurality of antennas.

As at least one alternative embodiment, the first target dimension may be a one-dimensional straight line, or may also be a two-dimensional plane. That is to say, the at least two antennas on the first target dimension may be at least two antennas on the same straight line, or may also be at least two antennas on the same plane.

In order to further accurately determine the horizontal azimuth angle between the tested target and the testing site, the first determination module of the present disclosure includes a first acquisition module, a second determination module, and a third determination module. The first **acquisition** module is configured to acquire a first ratio between the receiving signal values of at least two antennas on the first target dimension; the second determination module is configured to determine a first included angle between the first target dimension and a direction of the tested target based on the first ratio; and the third determination module is configured to determine the horizontal azimuth angle between the tested target and the testing site based on the first included angle.

As at least one alternative embodiment, when there are two antennas, the first ratio may be obtained by directly calculating a ratio between the receiving signal values of the two antennas. When there are more than two antennas, ratios between the receiving signal values of any two antennas are calculated to obtain a plurality of ratios, and then an average value of the plurality of ratios is calculated to obtain the first ratio. In the present disclosure, calculation formulas of the ratio is not specifically limited, for example, $\mathrm{Ratio} = \frac{R_i}{R_j}$, $\mathrm{Ratio} = \frac{R_i - R_j}{R_j}$, or $\mathrm{Ratio} = \frac{R_i - R_{ave}}{R_j - R_{ave}}$, where Ratio is the first ratio, $R_i$ is the receiving signal value of the ith antenna, $R_j$ is the receiving signal value of the jth antenna, and $R_{ave}$ is an average value of the receiving signal values of at least two antennas.

The second determination module includes a first acquisition sub-module, a first determination sub-module, and a second determination sub-module. The first acquisition sub-module is configured to acquire a plurality of first predetermined ratio thresholds, where the plurality of first predetermined ratio thresholds are configured to determine a plurality of first ratio ranges, and different first ratio ranges correspond to different first predetermined included angles; the first determination sub-module is configured to determine a first target ratio range corresponding to the first ratio based on a comparison of the first ratio with the plurality of first ratio ranges; and the second determination sub-module is configured to determine the first predetermined included angle corresponding to the first target ratio range as the first included angle between the first target dimension and the direction of the tested target. The apparatus may further accurately determine the first included angle between the first target dimension and the direction of the tested target based on the first ratio.

As at least one alternative embodiment, the first target ratio range may be determined by quantizing an angular space and using the first predetermined ratio thresholds, or may also be determined by establishing a segmented mapping function of the first ratio range and the first ratio, and the present disclosure is not strictly limited thereto. Moreover, in the technical solution, the number of the first ratio ranges is not limited.

The second determination sub-module includes a second acquisition sub-module and a selection sub-module. The second acquisition sub-module is configured to respectively acquire the first included angles corresponding to at least two first target dimensions when there are at least two first target dimensions; and the selection sub-module is configured to select the same included angles among the first included angles corresponding to the at least two first target dimensions as the horizontal azimuth angle between the tested target and the testing site. The apparatus further accurately determines the horizontal azimuth angle between the tested target and the testing site based on the first included angle.

As at least one alternative embodiment, when there are at least two first target dimensions, since two antennas are only on one dimension, there is necessarily ambiguity in the estimation of angles on the plane, that is, the estimated angles are two angles that are symmetrical to the line where the two angles are located. Thus, another non-parallel dimension is also needed for distinguishing. Therefore, the horizontal azimuth angle may be finally determined by combining the first included angles corresponding to at least two first target dimensions. In another embodiment, when there are at least two first target dimensions and the first target dimensions are not orthogonal to each other, the angles of the two first target dimensions may be amended through Euclidean space conversion.

The first determination unit includes a second selection module and a fourth determination module. The second selection module is configured to select the receiving signal values of at least two antennas on a second target dimension from the receiving signal values respectively corresponding to the plurality of antennas; and the fourth determination module is configured to determine the vertical pitch angle between the tested target and the testing site based on the receiving signal values of at least two antennas on the second target dimension. The apparatus may further accurately determine the vertical pitch angle between the tested target and the testing site according to the receiving signal values respectively corresponding to the plurality of antennas.

As at least one alternative embodiment, the second target dimension may be a one-dimensional straight line, or may also be a two-dimensional plane. That is to say, the at least two antennas on the second target dimension may be at least two antennas on the same straight line, or may also be at least two antennas on the same plane.

The second selection module includes a selection module, which is configured to select, as the second target dimension, a dimension where a normal direction does not overlap with a direction of the tested target. The apparatus may rapidly determine the second target dimension to further improve the accuracy of determining the vertical pitch angle.

In a practical application, the normal direction and the direction of the tested target may not be in adjacent regions. The dimension where the normal direction does not overlap with the direction of the tested target is the second target dimension, such that at least two antennas on the second target dimension may be further rapidly selected, thereby improving the accuracy of determining the vertical pitch angle.

In order to further improve the accuracy of determining the vertical pitch angle, the fourth determination module includes a second acquisition module, an adjustment module, a third acquisition module, a fifth determination module, and a sixth determination module. The second acquisition module is configured to acquire a second ratio between the receiving signal values of at least two antennas on the second target dimension; the adjustment module is configured to adjust angles of the at least two antennas to change radiation patterns of the antennas; the third acquisition module is configured to acquire a third ratio between the receiving signal values of the at least two adjusted antennas on the second target dimension; the fifth determination module is configured to determine a second included angle between the second target dimension and a direction of the tested target based on the second ratio and the third ratio; and the sixth determination module is configured to determine the second included angle as the vertical pitch angle between the tested target and the testing site.

As at least one alternative embodiment, adjusting the angles of the at least two antennas may use adjustment for symmetrical or opposite polarization, or may also be adjustment of the directionality of equally spaced antennas; and an adjustment mode may be electrically tunable, mechanical, etc., and the present disclosure is not strictly limited thereto. Calculation modes of the second ratio and the third ratio are similar to a calculation mode of the first ratio, and are not described herein again.

The fifth determination module includes a third acquisition sub-module, a third determination sub-module, and a fourth determination sub-module. The third acquisition sub-module is configured to acquire a plurality of second predetermined ratio thresholds, where the plurality of second predetermined ratio thresholds are configured to determine a plurality of second ratio ranges, and different second ratio ranges correspond to different second predetermined included angles; the third determination sub-module is configured to determine a second target ratio range based on a comparison of a difference value between the second ratio and the third ratio with the plurality of second ratio ranges; and the fourth determination sub-module is configured to determine the second predetermined included angle corresponding to the second target ratio range as the second included angle between the second target dimension and the direction of the tested target. The apparatus further accurately determines the second included angle between the second target dimension and the direction of the tested target based on the second ratio and the third ratio.

As at least one alternative embodiment, the second ratio range may be determined by quantizing an angular space and using the second predetermined ratio thresholds, or may also be determined by establishing a segmented mapping function of the second ratio range and the second ratio or the third ratio, and the present disclosure is not strictly limited thereto. Moreover, in the technical solution, the number of the second ratio ranges is not limited. The second target ratio range is determined based on the comparison of the difference value between the second ratio and the third ratio with the plurality of second ratio ranges, such that the comparison with the second ratio range may be realized merely according to the difference value between the second ratio and the third ratio, or according to a ratio of the difference value to amend parameters.

The second determination unit includes a seventh determination module, an eighth determination module, a ninth determination module, and a tenth determination module. The seventh determination module is configured to determine an antenna gain of a corresponding antenna according to the horizontal azimuth angle, the vertical pitch angle, and a direction of the tested target and the corresponding antenna; the eighth determination module is configured to determine a path loss between the corresponding antenna and the tested target according to the antenna gain of the corresponding antenna, an emission signal value of the tested target, and the receiving signal value of the corresponding antenna; the ninth determination module is configured to determine a distance between the tested target and the corresponding antenna according to the path loss corresponding to the corresponding antenna; and the tenth determination module is configured to determine the space distance between the tested target and the testing site based on distances respectively corresponding to the plurality of antennas on the testing site. The apparatus may further rapidly calculate the space distance.

As at least one alternative embodiment, the antenna gain includes an emission antenna gain and a receiving antenna gain, where the emission antenna gain and the receiving antenna gain may be approximately the same. Antenna gain values corresponding to the measured horizontal azimuth angle and vertical pitch angle may be found according to an antenna chart or a parameter table provided by an antenna manufacturer. The corresponding antenna gain values may be found in the chart according to the angles obtained through measurement. According to the known horizontal azimuth angle $\theta$ and vertical pitch angle $\varphi$, and in combination with the directionality of the antenna, the corresponding antenna gain values $G_r(\theta,\varphi)$ are calculated, such that the path loss $PL_i$ is calculated according to a formula $PL_i = Pt + G_t + G_r - RSSI_i$, where $P_t$ is emission power, $G_t$ is the emission antenna gain, and $RSSI_i$ is the receiving signal value of the corresponding antenna. Then, according to a formula $PL_i = \alpha + 10\beta \log_{10}(d_i)$, the space distance is calculated, where $\alpha$ and $\beta$ are fitting coefficients.

The third determination unit includes an establishment module and a calculation module. The establishment module is configured to establish a space coordinate system by using a geometric center of the testing site as an original point; and the calculation module is configured to, according to the horizontal azimuth angle, the vertical pitch angle, and the space distance, calculate three-dimensional coordinates of the tested target in the space coordinate system to obtain the spatial position of the tested target. The apparatus may further rapidly determine the spatial position of the tested target.

As at least one alternative embodiment, in the process of actually establishing the predetermined coordinate system, the geometric center of the antenna of the tested target may be used as an original point to establish the space coordinate system, and three-dimensional coordinates of the object to be positioned are calculated according to parameters such as an azimuth angle, a pitch angle, the distance, and the like; and other coordinate systems may also be established by using other original point positions.

The positioning apparatus includes a processor and a memory. The acquisition unit, the first determination unit, the second determination unit, the third determination unit, and the like are all stored in the memory as program units. The processor executes the program units stored in the memory to implement corresponding functions. The above modules are all located in a same processor; or the above modules are located in different processors in any combination. The processor includes a kernel, and the kernel invokes the corresponding program units from the memory. There may be one or more kernels arranged. An object is positioned by adjusting kernel parameters. The memory may include a non-persistent memory in a computer-readable medium, a Random Access Memory (RAM) and/or a non-volatile memory, for example, a Read Only Memory (ROM) or a flash memory (flash RAM). The memory includes at least one memory chip.

An embodiment of the present disclosure provides a computer-readable storage medium. The computer-readable storage medium includes a stored program. When the program is operated, a device where the computer-readable storage medium is located is controlled to execute the positioning method.

An embodiment of the present disclosure provides a processor. The processor is configured to operate a program. The positioning method is executed when the program is operated.

An embodiment of the present disclosure provides a device. The device includes a processor, a memory, and a program stored on the memory and executable on the processor. The processor, when executing the program, implements at least the following steps of the method. The device herein may be a server, a PC, a PAD, a mobile phone, or the like.

The present disclosure further provides a computer program product. When being executed on a data processing device, the computer program product is adapted to execute a program initialized with at least the following method steps.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present application may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure is not limited to any specific combination of hardware and software.

Those skilled in the art should understand that the embodiments of the present disclosure may be provided as a method, a system, or a computer program product. Therefore, the present disclosure may adopt forms of complete hardware embodiments, complete software embodiments or embodiments integrating software and hardware. Moreover, the present disclosure may adopt the form of a computer program product implemented on one or more computer available storage media (including but being not limited to a disk memory, a Compact Disc Read Only Memory (CD-ROM), an optical memory, and the like) containing computer available program codes.

The present disclosure is described with reference to flowcharts and/or block diagrams of the method, the device (system) and the computer program product according to the embodiments of the present disclosure. It should be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These computer program instructions may also be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These computer program instructions may also be loaded on the computer or other programmable data processing devices, so that a series of operation steps are performed on the computer or other programmable data processing devices to generate the processing implemented by the computer, and the instructions executed on the computer or other programmable data processing devices provide the steps for implementing the specified functions in one or more flows of the flowchart and/or one or more blocks of the block diagram. In a typical configuration, a computing device includes one or more processors (CPUs), an input/output interface, a network interface, and an internal memory. The memory may include a non-persistent memory in a computer-readable medium, a Random Access Memory (RAM) and/or a non-volatile memory, for example, a Read Only Memory (ROM) or a flash memory (flash RAM). The memory is an example of the computer-readable medium.

The computer-readable medium includes both persistent and non-permanent, removable and non-removable media, and may achieve information storage by any method or technology. The information may be a computer-readable instruction, a data structure, a module of a program, or other data. Examples of a computer storage medium include but are not limited to a Phase Change Memory (PRAM), a Static Random Access Memory (SRAM), a Dynamic Random Access Memory (DRAM), other types of Random Access Memories (RAM), a Read-Only Memory (ROM), an Electrically Erasable Programmable Read-Only Memory (EEPROM), a flash memory or other memory technologies, a Compact Disk Read-Only Memory (CD-ROM), a Digital Versatile Disc (DVD) or other optical storages, a cartridge storage, a magnetic tape disk storage or other magnetic storage devices or any other non-transmitting medium that may be configured to store information accessible by a computing device. According to the definition herein, the computer-readable medium does not include transitory computer-readable media, such as modulated data signals and carriers.

It is also to be noted that, terms "comprise", "include" or any other variants are intended to encompass non-exclusive inclusion, such that a process, a method, a commodity, or a device including a series of elements not only include those elements, but also includes other elements not listed explicitly or includes intrinsic elements for the process, the method, the commodity, or the device. Without any further limitation, an element defined by the phrase "comprising one" does not exclude existence of other same elements in the process, the method, the commodity, or the device that includes the elements.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure shall fall within the scope of protection of the present disclosure.

**Claims**

1.  A positioning method, comprising:

    acquiring receiving signal values respectively corresponding to a plurality of antennas on a same testing site, wherein the receiving signal values are values of signals respectively received from a tested target;
    according to the receiving signal values respectively corresponding to the plurality of antennas, determining a horizontal azimuth angle between the tested target and the testing site and a vertical pitch angle between the tested target and the testing site;
    determining a space distance between the tested target and the testing site; and
    determining a spatial position of the tested target according to the horizontal azimuth angle, the vertical pitch angle, and the space distance.

2.  The method as claimed in claim 1, wherein according to the receiving signal values respectively corresponding to the plurality of antennas, determining the horizontal azimuth angle between the tested target and the testing site comprises:

    selecting receiving signal values of at least two antennas on a first target dimension from the receiving signal values respectively corresponding to the plurality of antennas; and
    determining the horizontal azimuth angle between the tested target and the testing site based on the receiving signal values of at least two antennas on the first target dimension.

3.  The method as claimed in claim 2, wherein determining the horizontal azimuth angle between the tested target and the testing site based on the receiving signal values of at least two antennas on the first target dimension comprises:

    acquiring a first ratio between the receiving signal values of at least two antennas on the first target dimension;
    determining a first included angle between the first target dimension and a direction of the tested target based on the first ratio; and
    determining the horizontal azimuth angle between the tested target and the testing site based on the first included angle.

4. The method as claimed in claim 3, wherein determining the first included angle between the first target dimension and the direction of the tested target based on the first ratio comprises:

acquiring a plurality of first predetermined ratio thresholds, wherein the plurality of first predetermined ratio thresholds are configured to determine a plurality of first ratio ranges, and different first ratio ranges correspond to different first predetermined included angles;
determining a first target ratio range corresponding to the first ratio based on a comparison of the first ratio with the plurality of first ratio ranges; and
determining a first predetermined included angle corresponding to the first target ratio range as the first included angle between the first target dimension and the direction of the tested target.

5. The method as claimed in claim 3, wherein determining the horizontal azimuth angle between the tested target and the testing site based on the first included angle comprises:

respectively acquiring first included angles corresponding to at least two first target dimensions when there are at least two first target dimensions; and
selecting the same included angles among the first included angles corresponding to the at least two first target dimensions as the horizontal azimuth angle between the tested target and the testing site.

6. The method as claimed in claim 1, wherein according to the receiving signal values respectively corresponding to the plurality of antennas, determining the vertical pitch angle between the tested target and the testing site comprises:

selecting receiving signal values of at least two antennas on a second target dimension from the receiving signal values respectively corresponding to the plurality of antennas; and
determining the vertical pitch angle between the tested target and the testing site based on the receiving signal values of at least two antennas on the second target dimension.

7. The method as claimed in claim 6, wherein selecting the receiving signal values of the at least two antennas on the second target dimension from the receiving signal values respectively corresponding to the plurality of antennas comprises:
selecting, as the second target dimension, a dimension where a normal direction does not overlap with a direction of the tested target.

8. The method as claimed in claim 6, wherein determining the vertical pitch angle between the tested target and the testing site based on the receiving signal values of at least two antennas on the second target dimension comprises:

acquiring a second ratio between the receiving signal values of at least two antennas on the second target dimension;
adjusting angles of the at least two antennas to change radiation patterns of the antennas;
acquiring a third ratio between receiving signal values of the at least two adjusted antennas on the second target dimension;
determining a second included angle between the second target dimension and a direction of the tested target based on the second ratio and the third ratio; and
determining the second included angle as the vertical pitch angle between the tested target and the testing site.

9. The method as claimed in claim 8, wherein determining the second included angle between the second target dimension and the direction of the tested target based on the second ratio and the third ratio comprises:

acquiring a plurality of second predetermined ratio thresholds, wherein the plurality of second predetermined ratio thresholds are configured to determine a plurality of second ratio ranges, and different second ratio ranges correspond to different second predetermined included angles;
determining a second target ratio range based on a comparison of a difference value between the second ratio and the third ratio with the plurality of second ratio ranges; and
determining a second predetermined included angle corresponding to the second target ratio range as the second included angle between the second target dimension and the direction of the tested target.

10. The method as claimed in claim 1, wherein determining the space distance between the tested target and the testing site comprises:

determining an antenna gain of a corresponding antenna according to the horizontal azimuth angle, the vertical pitch angle, and a direction of the tested target and the corresponding antenna;

determining a path loss between the corresponding antenna and the tested target according to the antenna gain of the corresponding antenna, an emission signal value of the tested target, and the receiving signal value of the corresponding antenna;

determining a distance between the tested target and the corresponding antenna according to the path loss corresponding to the corresponding antenna; and

determining the space distance between the tested target and the testing site based on distances respectively corresponding to the plurality of antennas on the testing site.

11. The method as claimed in claim 1, wherein determining the spatial position of the tested target according to the horizontal azimuth angle, the vertical pitch angle, and the space distance comprises:

establishing a space coordinate system by using a geometric center of the testing site as an original point; and

according to the horizontal azimuth angle, the vertical pitch angle, and the space distance, calculating three-dimensional coordinates of the tested target in the space coordinate system to obtain the spatial position of the tested target.

12. A positioning apparatus, comprising:

an acquisition unit, configured to acquire receiving signal values respectively corresponding to a plurality of antennas on a same testing site, wherein the receiving signal values are values of signals respectively received;

a first determination unit, configured to, according to the receiving signal values respectively corresponding to the plurality of antennas, determine a horizontal azimuth angle between the tested target and the testing site and a vertical pitch angle between the tested target and the testing site;

a second determination unit, configured to determine a space distance between the tested target and the testing site; and

a third determination unit, configured to determine a spatial position of the tested target according to the horizontal azimuth angle, the vertical pitch angle, and the space distance.

13. A computer-readable storage medium, comprising a stored program, wherein, when the program is operated, a device where the computer-readable storage medium is located is controlled to execute the positioning method as claimed in any one of claims 1 to 11.

14. An electronic apparatus, comprising a memory and a processor, wherein the memory stores a computer program; and the processor is configured to execute the positioning method as claimed in any one of claims 1 to 11 by means of the computer program.

## Fig. 1

Input/output device 108

Transmission device 106

Processor 102

Memory 104

## Fig. 2

Receiving signal values respectively corresponding to a plurality of antennas on a same testing site are acquired, wherein the receiving signal values are values of signals respectively received from a tested target — S201

According to the receiving signal values respectively corresponding to the plurality of antennas, a horizontal azimuth angle between the tested target and the testing site and a vertical pitch angle between the tested target and the testing site are determined — S202

A space distance between the tested target and the testing site is determined — S203

A spatial position of the tested target is determined according to the horizontal azimuth angle, the vertical pitch angle, and the space distance — S204

Fig. 3

302

303 306    304    305

301

Fig. 4

307

301

Fig. 5

308

301

Fig. 6

Angle H3

y

304

303

Angle H4

Angle H2

Angle H5 ————— Angle H1

x

Angle H6

Angle H8

305

306

Angle H7

Fig. 7

State 1

Angle V2

x-y

State 2

Fig. 8

Acquisition unit 10

First determination unit 20

Second determination unit 30

Third determination unit 40

## INTERNATIONAL SEARCH REPORT

| | International application No. |
|---|---|
| | **PCT/CN2024/104509** |

**A. CLASSIFICATION OF SUBJECT MATTER**

G01S5/02(2010.01)i; H04W4/029(2018.01)i

According to International Patent Classification (IPC) or to both national classification and IPC

**B. FIELDS SEARCHED**

Minimum documentation searched (classification system followed by classification symbols)

IPC: G01S, H04W, G01C, G06F

Documentation searched other than minimum documentation to the extent that such documents are included in the fields searched

Electronic data base consulted during the international search (name of data base and, where practicable, search terms used)

CNTXT, CNKI, ENTXTC, ENTXT, WPABSC, WPABS, DWPI: 定位, 天线, 多个, 三个, 四个, 基站, 被测, 目标, 标签, 射频, 无线, 方位角, 俯仰角, 仰角, 水平, 垂直, 距离, 空间, 位置, 三维, 坐标, position, orientation, antennas, multiple, three, four, base, station, measure, target, tag, radio, frequency, azimuth, elevation, horizontal, vertical, distance, space, location, dimension, coordinate

**C. DOCUMENTS CONSIDERED TO BE RELEVANT**

| Category* | Citation of document, with indication, where appropriate, of the relevant passages | Relevant to claim No. |
|---|---|---|
| X | CN 109597027 A (TSINGHUA UNIVERSITY) 09 April 2019 (2019-04-09) description, paragraphs [0004]-[0085], and figures 1-5 | 1-14 |
| X | CN 113873435 A (BOE TECHNOLOGY GROUP CO., LTD.) 31 December 2021 (2021-12-31) description, paragraphs [0003]-[0111], figures 1A-2 | 1-14 |
| X | CN 104375135 A (JIANGSU PILOTAGE NETWORK TECHNOLOGY CO., LTD.) 25 February 2015 (2015-02-25) description, paragraphs [0005]-[0134], and figures 1-10 | 1-14 |
| A | CN 108802713 A (ZHENGZHOU LOCARIS ELECTRONIC TECHNOLOGY CO., LTD.) 13 November 2018 (2018-11-13) entire document | 1-14 |
| A | CN 109782227 A (CORELINK TECHNOLOGY CO., LTD.) 21 May 2019 (2019-05-21) entire document | 1-14 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 December 2024** | **23 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/104509** |

**C.  DOCUMENTS CONSIDERED TO BE RELEVANT**

| Category* | Citation of document, with indication, where appropriate, of the relevant passages | Relevant to claim No. |
| --- | --- | --- |
| A | CN 112995888 A (SHENZHEN YOUBISHENG INFORMATION TECHNOLOGY CO., LTD.) 18 June 2021 (2021-06-18) entire document | 1-14 |
| A | CN 118158727 A (BEIJING HWA-TECH INFORMATION SYSTEM CO., LTD.) 07 June 2024 (2024-06-07) entire document | 1-14 |
| A | US 2021127634 A1 (AGIS AUTOMATISERING B.V.) 06 May 2021 (2021-05-06) entire document | 1-14 |

Form PCT/ISA/210 (second sheet) (July 2022)

**INTERNATIONAL SEARCH REPORT**
Information on patent family members

International application No.

**PCT/CN2024/104509**

| Patent document cited in search report | | | Publication date (day/month/year) | Patent family member(s) | | | Publication date (day/month/year) |
|---|---|---|---|---|---|---|---|
| CN | 109597027 | A | 09 April 2019 | None | | | |
| CN | 113873435 | A | 31 December 2021 | None | | | |
| CN | 104375135 | A | 25 February 2015 | None | | | |
| CN | 108802713 | A | 13 November 2018 | None | | | |
| CN | 109782227 | A | 21 May 2019 | None | | | |
| CN | 112995888 | A | 18 June 2021 | None | | | |
| CN | 118158727 | A | 07 June 2024 | None | | | |
| US | 2021127634 | A1 | 06 May 2021 | AU | 2019279452 | A1 | 14 January 2021 |
| | | | | AU | 2019279452 | B2 | 31 October 2024 |
| | | | | NL | 2021045 | B1 | 10 December 2019 |
| | | | | EP | 3803442 | A1 | 14 April 2021 |
| | | | | US | 11310996 | B2 | 26 April 2022 |
| | | | | WO | 2019231331 | A1 | 05 December 2019 |

Form PCT/ISA/210 (patent family annex) (July 2022)